# EUROPEAN PATENT APPLICATION

(11) **EP 4 843 968 A1**
(43) Date of publication of application: **25.11.2026**
(21) Application number: 25742034.9
(22) Date of filing: 17.01.2025
(51) Int. Cl.: C04B 35/484, C03B 5/43, C04B 35/657

(54) **ELECTROFORMED REFRACTORY MATERIAL, METHOD FOR PRODUCING ELECTROFORMED REFRACTORY MATERIAL, AND GLASS MELTING FURNACE**

(30) Priority: 18.01.2024 JP 2024006270
(71) Applicant: AGC Ceramics Co., Ltd., Tokyo 108-0014 (JP)
(72) Inventor: NOMURA, Soma, Tokyo 108-0014 (JP); SARWAR, Jawad, Tokyo 108-0014 (JP); MATANO, Kenji, Tokyo 108-0014 (JP)
(74) Representative: Müller-Boré & Partner Patentanwälte PartG mbB
(86) International application number: PCT/JP2025/001432
(87) International publication number: WO 2025/154809

(57) **Abstract**

Provided are an electrocast refractory, containing, as a chemical composition on an oxide basis, with respect to 100% by mass of the total of oxides: 85.0% by mass or more of ZrO₂, from 8.0 to 12.0% by mass of SiO₂, from 0.10% by mass to less than 0.80% by mass of Al₂O₃, from 0.01 to 1.0% by mass of P₂O₅, from 0.10 to 0.20% by mass in total of Na₂O and/or K₂O, and from 0.05 to 2.0% by mass of B₂O₃, in which the total amount of Fe₂O₃ and TiO₂ is less than 0.55% by mass, a method of producing the same, and a glass melting furnace using the electrocast refractory.

## Description

### Technical Field

The present disclosure relates to an electrocast refractory, a method of producing an electrocast refractory, and a glass melting furnace.

### Background Art

Conventionally, high-zirconia electrocast refractories containing a large amount of ZrO₂ as a chemical component are known. Since high-zirconia electrocast refractories have high corrosion resistance against molten glass and low pollution properties, they are widely used in portions of glass melting furnaces in contact with molten glass and the like. Such high-zirconia electrocast refractories contain a large amount of zirconia crystal grains and a small amount of matrix glass between the grains. For example, Patent Literatures 1 to 9 propose high-zirconia refractories containing various components besides ZrO₂ in a specific ratio.

### Citation list

### Patent literatures

Patent Literature 1: Japanese Patent Application Laid-Open (JP-A) No. H06-287059
Patent Literature 2: Japanese Patent Application Laid-Open (JP-A) No. H08-277162
Patent Literature 3: Japanese Patent Application Laid-Open (JP-A) No. 2009-155150
Patent Literature 4: Japanese Patent Application Laid-Open (JP-A) No. 2010-260782
Patent Literature 5: Japanese National-Phase Publication (JP-A) No. 2012-518588
Patent Literature 6: Japanese Patent Application Laid-Open (JP-A) No. 2019-048761
Patent Literature 7: Chinese Patent Application Publication No. 101443290
Patent Literature 8: Chinese Patent Application Publication No. 104583154
Patent Literature 9: Chinese Patent Application Publication No. 113454045

### SUMMARY OF INVENTION

### Technical Problem

It is preferable that an electrocast refractory has a high electrical resistivity at the operating temperature from the viewpoint of suppressing the flow of current through the refractory in a glass melting furnace in which glass is electrically melted, for example.

Further, ZrO₂ has a transformation expansion due to a phase transition between a monoclinic crystal and a tetragonal crystal near 1150°C during heating and near 850°C during cooling, and a large volume change occurs as the temperature rises and drops. Matrix glass that fills the gaps of ZrO₂ plays a role of relaxing a stress caused by the volume change of ZrO₂. However, if the volume change during the temperature rise and the temperature drop is large, it causes cracking of the refractory, and therefore, it is desirable to reduce an expansion rate after undergoing a temperature cycle, that is, a residual volume expansion rate.

In addition, for example, during the operation of a glass melting furnace, matrix glass in the refractory may exude into the molten glass at a contact portion between the refractory and the molten glass (also referred to as "glass exudation"). The occurrence of glass exudation causes defects in the resulting glass products.

In view of such circumstances, the present disclosure relates to provision of an electrocast refractory having a high electrical resistivity, a low residual volume expansion rate, and capable of suppressing glass exudation, a method of producing the same, and a glass melting furnace using the electrocast refractory.

### Solution to Problem

Means for solving the foregoing problems include the following aspects.
(1) An electrocast refractory, containing, as a chemical composition on an oxide basis, with respect to 100% by mass of a total of oxides:
   85.0% by mass or more of ZrO₂,
   from 8.0 to 12.0% by mass of SiO₂,
   from 0.10% by mass to less than 0.80% by mass of Al₂O₃,
   from 0.01 to 1.0% by mass of P₂O₅,
   from 0.10 to 0.20% by mass in total of Na₂O and/or K₂O, and
   from 0.05 to 2.0% by mass of B₂O₃,
   wherein a total amount of Fe₂O₃ and TiO₂ is less than 0.55% by mass.
(2) The electrocast refractory according to (1), containing, as a chemical composition on an oxide basis, with respect to 100% by mass of the total of oxides:
   from 0.10 to 0.70% by mass of Al₂O₃,
   from 0.01 to 0.5% by mass of P₂O₅, and
   from 0.10% by mass to 1.5% by mass of B₂O₃.
(3) The electrocast refractory according to (1) or (2), containing, as a chemical composition on an oxide basis, with respect to 100% by mass of the total of oxides:
   from 0.10 to 0.60% by mass of Al₂O₃,
   from 0.01 to 0.3% by mass of P₂O₅, and
   from 0.50% by mass to 1.3% by mass of B₂O₃.
(4) The electrocast refractory according to any one of (1) to (3), containing from 0.11 to 0.20% by mass in total of Na₂O and/or K₂O.
(5) The electrocast refractory according to any one of (1) to (4), wherein a total amount of Fe₂O₃ and TiO₂ is 0.30% by mass or less as a chemical composition on an oxide basis, with respect to 100% by mass of the total of oxides.
(6) The electrocast refractory according to any one of (1) to (5), wherein a value obtained by dividing a total mass of Na₂O and K₂O by a mass of SiO₂ is 0.01 or more.
(7) The electrocast refractory according to any one of (1) to (6), wherein a value obtained by dividing a total mass of B₂O₃ and P₂O₅ by a mass of Al₂O₃ is 1.0 or more.
(8) The electrocast refractory according to any one of (1) to (7), wherein an electrical resistivity at 1600°C is 300 Ω·cm or more.
(9) The electrocast refractory according to any one of (1) to (8), wherein an electrical resistivity at 1600°C is 400 Ω·cm or more.
(10) The electrocast refractory according to any one of (1) to (9), wherein a residual volume expansion rate obtained by the following formula is 10% or less, after performing a thermal cycle test on the electrocast refractory, in which a cycle of raising a temperature from 800°C to 1250°C at 450°C/h and lowering a temperature from 1250°C to 800°C at 450°C/h is repeated 40 times: 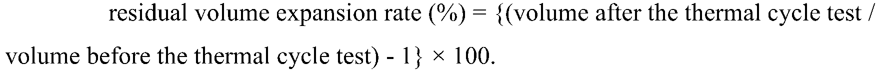 residual volume expansion rate (%) = {(volume after the thermal cycle test / volume before the thermal cycle test) - 1} × 100.
(11) A glass melting furnace, including the electrocast refractory according to any one of (1) to (10).
(12) A method of producing an electrocast refractory, the method including:
   heating and melting a refractory raw material; and
   cooling a molten material in a mold,
   wherein the refractory raw material contains, with respect to a total mass of oxides:
      85.0% by mass or more of ZrO₂,
      from 8.0 to 12.0% by mass of SiO₂,
      from 0.10% by mass to less than 0.80% by mass of Al₂O₃,
      from 0.01 to 1.0% by mass of P₂O₅,
      from 0.10 to 0.20% by mass in total of Na₂O and/or K₂O, and
      from 0.05 to 2.0% by mass of B₂O₃, and
      wherein a total amount of Fe₂O₃ and TiO₂ is less than 0.55% by mass.

### Advantageous Effects of Invention

According to the present disclosure, an electrocast refractory having a high electrical resistivity, a low residual volume expansion rate, and capable of suppressing glass exudation, a method of producing the same, and a glass melting furnace using the electrocast refractory are provided.

### DESCRIPTION OF EMBODIMENTS

Hereinafter, modes for carrying out embodiments according to the present disclosure will be described in detail. However, embodiments according to the present disclosure are not limited to the following embodiments. In the following embodiments, constituent elements (including element steps and the like) are not essential unless otherwise specified. The same applies to numerical values and ranges thereof, which do not limit the embodiments according to the present disclosure.

In the present disclosure, numerical ranges indicated using "to" include the numerical values described before and after "to" as a minimum value and a maximum value, respectively.

In the present disclosure, each component may contain multiple corresponding substances. In a case in which multiple substances that correspond to each component are present in a composition, the content or the amount of each component means the total content or the total amount of such multiple substances present in the composition, unless otherwise specified.

In the present disclosure, a combination of two or more preferred aspects is a more preferred aspect.

### <Electrocast Refractory>

The electrocast refractory according to the present disclosure (hereinafter, also simply referred to as "refractory") contains, as a chemical composition on an oxide basis, with respect to 100% by mass of the total of oxides:
85.0% by mass or more of ZrO₂,
from 8.0 to 12.0% by mass of SiO₂,
from 0.10% by mass to less than 0.80% by mass of Al₂O₃,
from 0.01 to 1.0% by mass of P₂O₅,
from 0.10 to 0.20% by mass in total of Na₂O and/or K₂O, and
from 0.05 to 2.0% by mass of B₂O₃,
wherein a total amount of Fe₂O₃ and TiO₂ is less than 0.55% by mass.

The inventors found that the refractory having the foregoing composition has a high electrical resistivity, a low residual volume expansion rate, and can suppress glass exudation. Although the reason for this is not necessarily clear, it is presumed as follows.

In the refractory according to the present disclosure, Al₂O₃ is limited to less than 0.80% by mass. It is considered that, by suppressing the amount of Al₂O₃ in the foregoing range, the electrical resistivity of ZrO₂ and the matrix glass is improved.

Further, P₂O₅ and B₂O₃, which form a glass phase similarly to SiO₂, have an effect of adjusting the viscosity of the matrix glass to prevent cracking from occurring during manufacturing, and improving, or suppressing a decrease in, the electrical resistivity.

Furthermore, in the refractory according to the present disclosure, the total amount of Na₂O and K₂O is limited to 0.20% by mass or less. Na₂O and K₂O are present in the matrix glass, and the decrease in the electrical resistivity is suppressed by setting the total amount to 0.20% by mass or less. On the other hand, Na₂O and/or K₂O facilitate melting of the raw material. In addition, Na₂O and/or K₂O are present in the matrix glass and contribute to lowering the viscosity of the matrix glass. In the refractory according to the present disclosure, it is considered that, since 0.10% by mass or more in total of Na₂O and/or K₂O is contained, defective melting of the refractory is reduced while a favorable electrical resistivity is ensured, and an expansion during a transformation of zirconia during annealing can be absorbed, so that a dense brick can be obtained, whereby the residual volume expansion rate and the glass exudation are suppressed.

In addition, SiO₂ is a main component of the matrix glass, contributes to stress absorption of a volume change of ZrO₂, and suppresses the residual volume expansion rate.

In addition, in the refractory according to the present disclosure, the fact that B₂O₃ is limited to 2.0% by mass or less also contributes to suppressing the residual volume expansion rate.

While Fe₂O₃ and TiO₂ may be included as impurities, since the amounts of these components are limited, the refractory according to the present disclosure can favorably exhibit the action of the above-described components.

As described above, when the content rates of ZrO₂, SiO₂, Al₂O₃, P₂O₅, Na₂O and/or K₂O, B₂O₃, and Fe₂O₃ and TiO₂ are within the specific ranges, a refractory having a high electrical resistivity, a low residual volume expansion rate, and suppressed glass exudation is obtained. For example, while it is preferable that contents of Na₂O and/or K₂O are suppressed in order to increase the electrical resistivity, if the contents of Na₂O and/or K₂O are low, it is difficult to suppress the residual volume expansion rate and the glass exudation due to a decrease in denseness of the texture of the refractory. As such, maintaining or improving the electrical resistivity and suppressing the residual volume expansion rate and the glass exudation tend to be in a trade-off relationship, and are difficult to achieve at the same time. In the refractory according to the present disclosure, it is considered that these properties can be achieved at the same time by the combined actions of the specific proportions of the above components.

It is noted that the embodiments according to the present disclosure are not limited by the foregoing presumed mechanism.

In the present disclosure, the content or amount of a component of the refractory expressed as % by mass indicates the content or amount as a chemical composition on an oxide basis, assuming that the total of oxides of the refractory is 100% by mass, unless otherwise specified.

The chemical composition of the refractory is expressed by, in principle, quantitative analysis values determined by wavelength dispersive X-ray fluorescence spectrometry, quantitative analysis values determined by high-frequency inductively coupled plasma emission spectroscopy for B₂O₃, and quantitative values determined by atomic absorption spectrometry for Na₂O and K₂O. The content of ZrO₂ is determined by subtracting the mass of components other than ZrO₂ from the mass of the refractory.

The refractory contains 85.0% by mass or more of ZrO₂. ZrO₂ enhances the corrosion resistance of the refractory against molten glass. From the viewpoint of further enhancing the corrosion resistance of the refractory against molten glass, the content of ZrO₂ is preferably 85.5% by mass or more, and more preferably 86.0% by mass or more. From the viewpoint of suppressing the occurrence of cracking due to a volume change of ZrO₂, the content of ZrO₂ is preferably 91.5% by mass or less, more preferably 91.0% by mass or less, and still more preferably 90.0% by mass or less. From the foregoing viewpoints, the content of ZrO₂ is preferably from 85.0 to 91.5% by mass, more preferably from 85.5 to 91.0% by mass, and still more preferably from 86.0 to 90.0% by mass.

In addition, in a refractory using a zirconia source, a trace amount (generally about 2% by mass or less) of HfO₂ is inevitably mixed in ZrO₂. Since HfO₂ plays the same role as ZrO₂, it is customary to generally express a value obtained by adding HfO₂ and ZrO₂ as ZrO₂. In the present disclosure, for clarity, ZrO₂ in which HfO₂ is mixed (i.e., a mixture of ZrO₂ and HfO₂) is simply referred to as "ZrO₂" or "zirconia". That is, the term "ZrO₂" or "zirconia" means a mixture of ZrO₂ and HfO₂ contained therein, unless otherwise specified. For example, the phrase "the refractory contains 85.0% by mass or more of ZrO₂" means that the total amount of ZrO₂ and HfO₂ contained therein is 85.0% by mass or more.

The refractory contains from 8.0 to 12.0% by mass of SiO₂. SiO₂ is a component forming the matrix glass. When the refractory contains 8.0% by mass or more of SiO₂, the volume change of ZrO₂ can be suppressed, and this also contributes to an improvement in the electrical resistivity. From the viewpoint of further suppressing the volume change, the viewpoint of further improving the electrical resistivity, and the viewpoint of further achieving the foregoing advantages at the same time, the content of SiO₂ is preferably 8.5% by mass or more, more preferably 9.0% by mass or more, preferably 9.5% by mass or more, and still more preferably 10.0% by mass or more. From the viewpoint of suppressing occurrence of cracking by suppressing the viscosity of the matrix glass, the content of SiO₂ is preferably less than 12.0% by mass, preferably 11.5% by mass or less, and more preferably 11.0% by mass or less. From these viewpoints, the content of SiO₂ is preferably from 8.5 to 11.5% by mass, more preferably from 9.0 to 11.0% by mass, and still more preferably from 10.0 to 11.0% by mass.

The refractory contains from 0.10% by mass to less than 0.80% by mass of Al₂O₃. It is considered that, when the refractory contains 0.10% by mass or more of Al₂O₃, the viscosity of the matrix glass is suppressed, and occurrence of cracking can be suppressed. Further, when a part of the matrix glass reacts with zirconia crystals, zircon is generated, which may reduce the amount of the matrix glass and make it difficult for the matrix glass to exhibit its function. It is considered that generation of zircon can also be suppressed when the refractory contains Al₂O₃. From this viewpoint, the content of Al₂O₃ may be 0.20% by mass or more, may be 0.30% by mass or more, may be 0.40% by mass or more, and may be 0.45% by mass or more.

On the other hand, the inventors have found that the electrical resistivity of the refractory is increased by limiting Al₂O₃ in the refractory to less than 0.80% by mass. In addition, by limiting the content of Al₂O₃ in the refractory, it is possible to suppress generation of cracking due to generation of aluminosilicate crystals such as mullite during manufacturing or use of the refractory. From these viewpoints, the content of Al₂O₃ is preferably 0.70% by mass or less, and more preferably 0.60% by mass or less.

From these viewpoints, the content of Al₂O₃ is preferably from 0.10 to 0.70% by mass, and more preferably from 0.10 to 0.60% by mass.

The refractory contains from 0.01 to 1.0% by mass of P₂O₅. P₂O₅ contributes to an improvement in electrical resistivity. From the viewpoint of further improving the electrical resistivity, the content of P₂O₅ may be 0.03% by mass or more, may be 0.07% by mass or more, and may be 0.1% by mass or more. From the viewpoint of suppressing generation of zircon and suppressing residual expansion, and a chip-off in which a surface of the refractory is partially detached during heating, the content of P₂O₅ is preferably 0.5% by mass or less, and more preferably 0.3% by mass or less. From these viewpoints, the content of P₂O₅ is preferably from 0.01 to 0.5% by mass, and more preferably from 0.01 to 0.3% by mass.

The refractory contains from 0.10 to 0.20% by mass in total of Na₂O and/or K₂O. Na₂O and K₂O are present in the matrix glass, and a decrease in the electrical resistivity is suppressed by setting the total amount to 0.20% by mass or less. In addition, from the viewpoint that suppression of the residual volume expansion rate, suppression of cracking, and suppression of glass exudation can be achieved by improving denseness of the texture of the refractory exhibited as a result of suppressing generation of zircon and improving a melting property while a desired electrical resistivity is ensured, the total amount of Na₂O and/or K₂O is 0.10% by mass or more, may be more than 0.10% by mass, may be 0.11% by mass or more, may be 0.12% by mass or more, and may be 0.13% by mass or more. From the viewpoint of improving the electrical resistivity, the total amount of Na₂O and/or K₂O is 0.20% by mass or less, preferably 0.19% by mass or less, may be 0.18% by mass or less, may be 0.17% by mass or less, may be 0.16% by mass or less, and may be 0.15% by mass or less. From these viewpoints, the total amount of Na₂O and/or K₂O is preferably from more than 0.10% by mass to 0.20% by mass, more preferably from 0.11 to 0.20% by mass, and particularly preferably from 0.11 to 0.15% by mass.

Only one of Na₂O and K₂O may be contained, or both may be contained. The content of each of Na₂O and K₂O is independently from 0.10 to 0.20% by mass, preferably from more than 0.10% by mass to 0.18% by mass, and more preferably from 0.11 to 0.15% by mass, on a condition that the total content is from 0.10 to 0.20% by mass.

Further, among Na₂O and K₂O, K₂O is preferably contained in a larger amount. This is because, in Na₂O and K₂O, Na₂O has a larger ionic conductivity due to different ionic radii, and as the ionic conductivity is larger, the electrical resistance tends to be smaller. Therefore, when a further improvement in electrical resistance is intended, it is preferable that the refractory contains a larger amount of K₂O.

The refractory contains from 0.05 to 2.0% by mass of B₂O₃. When the refractory contains 0.05% by mass or more of B₂O₃, an effect of suppressing the occurrence of cracking during manufacturing can be obtained. In addition, by including B₂O₃ together with P₂O₅, the viscosity of the matrix glass decreases, and the occurrence of cracking can be suppressed. On the other hand, the electrical resistivity is less likely to decrease by an increase in the content of B₂O₃ compared with an alkali metal oxide such as Na₂O or K₂O. From these viewpoints, the content of B₂O₃ is preferably 0.10% by mass or more, more preferably 0.50% by mass or more, and still more preferably 0.60% by mass or more. From the viewpoint of suppressing the residual volume expansion rate, the content of B₂O₃ is preferably 1.5% by mass or less, and more preferably 1.0% by mass or less. From these viewpoints, the content of B₂O₃ is preferably from 0.10 to 2.0% by mass, and more preferably from 0.50 to 1.0% by mass.

The total amount of Fe₂O₃ and TiO₂ in the refractory is less than 0.55% by mass. Fe₂O₃ and TiO₂ are impurities that may be mixed from raw materials, and since they lower the electrical resistivity, their amount is preferably small. In addition, from the viewpoint of preventing a reaction product of iron and phosphorus from expanding at a high temperature to cause peeling, the amount of Fe₂O₃ is preferably small. Further, from the viewpoint of suppressing the residual volume expansion rate, the amount of TiO₂ is preferably small. From these viewpoints, the total amount of Fe₂O₃ and TiO₂ is preferably 0.40% by mass or less, and more preferably 0.30% by mass or less.

Only one of Fe₂O₃ and TiO₂ may be contained, both may be contained, or neither needs to be contained. The amount of each of them is 0.55% by mass or less, preferably 0.40% by mass or less, and more preferably 0.30% by mass or less.

In the refractory, the value obtained by dividing the total mass of Na₂O and K₂O by the mass of SiO₂ is preferably 0.01 or more (or 0.010 or more), and more preferably 0.011 or more, from the viewpoints of improving denseness of the texture of the refractory, suppressing the residual volume expansion rate, suppressing cracking, and suppressing the glass exudation. From the viewpoint of improving the electrical resistivity, the value is preferably 0.020 or less, preferably 0.017 or less, more preferably 0.015 or less, and still more preferably 0.013 or less. From these viewpoints, the value is preferably from 0.010 to 0.020, and more preferably from 0.010 to 0.013.

In the refractory, the value obtained by dividing the total mass of B₂O₃ and P₂O₅ by the mass of Al₂O₃ is preferably 1.0 or more (or 1.00 or more), more preferably 1.3 or more (or 1.30 or more), may be 1.4 or more (or 1.40 or more), and may be 1.5 or more (or 1.50 or more). A reduction in the amount of Al₂O₃ and addition of P₂O₅ both contribute to an improvement in the electrical resistivity, and B₂O₃ contributes to suppression of cracking. In order to obtain a refractory having a high electrical resistivity and having no cracking during manufacturing, the foregoing parameter is preferably within the foregoing ranges. When the value is 1.0 or more, it is considered that the electrical resistivity is particularly improved. From the viewpoint of a residual expansion rate, the upper limit of the value is preferably 3.0 or less (or 3.00 or less), more preferably 2.5 or less (or 2.50 or less), and still more preferably 2.0 or less (or 2.00 or less). From these viewpoints, the value is preferably from 1.0 to 3.0 (or from 1.00 to 3.00), more preferably from 1.3 to 3.0 (or from 1.30 to 3.00), still more preferably from 1.4 to 2.5 (or from 1.40 to 2.50), and particularly preferably from 1.5 to 2.0 (or from 1.50 to 2.00).

The refractory may include, or need not include, components other than the components described above (i.e., ZrO₂, SiO₂, Al₂O₃, P₂O₅, Na₂O, K₂O, B₂O₃, Fe₂O₃, and TiO₂), each independently. Examples of components derived from raw materials other than the components described above include components such as CaO, MgO, SrO, BaO, CuO, Y₂O₃, and ZnO.

In the refractory, the total amount of the components other than the components described above (i.e., ZrO₂, SiO₂, Al₂O₃, P₂O₅, Na₂O, K₂O, and B₂O₃) is preferably 0.7% by mass or less, more preferably 0.5% by mass or less, still more preferably 0.4% by mass or less, particularly preferably 0.2% by mass or less, extremely preferably 0.1% by mass or less, even more preferably less than 0.1% by mass, and even more preferably 0.05% by mass or less.

For example, CuO may be contained as an impurity in a refractory raw material. From the viewpoints of suppressing the coloring of the molten glass and suppressing a decrease in durability in a case of containing CuO together with P₂O₅ and/or B₂O₃, the amount of CuO is preferably small. The amount of CuO is preferably 0.1% by mass or less, more preferably 0.05% by mass or less, and still more preferably 0.01% by mass or less.

Further, MgO and CaO may also be contained as impurities in a refractory raw material. From the viewpoint of suppressing a decrease in the electrical resistance efficiency, the amounts of MgO and CaO are preferably small, and are each independently preferably 0.1% by mass or less, and more preferably 0.05% by mass or less.

Similarly, Y₂O₃ may also be contained as an impurity in a refractory raw material. From the viewpoint of suppressing a decrease in the electrical resistance efficiency, the amount of Y₂O₃ is preferably small, preferably 0.3% by mass or less, and more preferably 0.2% by mass or less.

In the refractory according to the present disclosure, for example, a high electrical resistivity, a low residual volume expansion rate, and suppression of the glass exudation can be achieved without intentionally adding components such as V₂O₅, CrO₃, Nb₂O₅, MoO₃, Ta₂O₅, WO₃, and SnO₂ described in Patent Literatures 7 and 8. For example, the total mass of V₂O₅, CrO₃, Nb₂O₅, MoO₃, Ta₂O₅, WO₃, and SnO₂ on an oxide basis may be less than 0.01% by mass, and may be 0.005% by mass or less, with respect to 100% by mass of the total of oxides.

The refractory preferably contains, as a chemical composition on an oxide basis, with respect to 100% by mass of the total of oxides:
from 0.10 to 0.70% by mass of Al₂O₃,
from 0.01 to 0.5% by mass of P₂O₅, and
from 0.10% by mass to 1.5% by mass of B₂O₃.

The refractory more preferably contains, as a chemical composition on an oxide basis, with respect to 100% by mass of the total of oxides:
from 0.10 to 0.60% by mass of Al₂O₃,
from 0.01 to 0.3% by mass of P₂O₅, and
from 0.50% by mass to 1.3% by mass of B₂O₃.

The refractory preferably contains, as a chemical composition on an oxide basis, with respect to 100% by mass of the total of oxides:
85.0% by mass or more of ZrO₂,
from 8.0 to 12.0% by mass of SiO₂,
from 0.10 to 0.65% by mass of Al₂O₃,
from 0.01 to 0.15% by mass of P₂O₅, and
from 0.50 to 1.0% by mass of B₂O₃,
wherein the total amount of Fe₂O₃ and TiO₂ is 0.30% by mass or less.

### [Method of Producing Refractory]

The refractory can be produced by heating and melting a refractory raw material and cooling a molten material in a mold.

In an embodiment of the present disclosure, a method of producing a refractory includes:
heating and melting a refractory raw material; and
cooling a molten material in a mold,
wherein the refractory raw material contains, with respect to the total mass of oxides:
   85.0% by mass or more of ZrO₂,
   from 8.0 to 12.0% by mass of SiO₂,
   from 0.10% by mass to less than 0.80% by mass of Al₂O₃,
   from 0.01 to 1.0% by mass of P₂O₅,
   from 0.10 to 0.20% by mass in total of Na₂O and/or K₂O, and
   from 0.05 to 2.0% by mass of B₂O₃, and
   wherein the total amount of Fe₂O₃ and TiO₂ is less than 0.55% by mass.

Details of each component contained in the refractory raw material are as described above.

Specifically, the refractory is produced, for example, by mixing powder raw materials to have the foregoing blending ratio, melting the mixed raw materials in an electric arc furnace, pouring the molten raw material into a graphite mold, and cooling the molten raw material. The refractory produced by electrocasting in this manner has a dense texture of ZrO₂ crystals and large crystal sizes, and therefore tends to be excellent in corrosion resistance. Heating during melting is performed, for example, by bringing graphite electrodes into contact with the raw material powder and applying a current to the electrodes.

### [Characteristics of Refractory]

The electrical resistivity of the refractory at 1600°C is preferably 300 Ω·cm or more, more preferably 350 Ω·cm or more, still more preferably 400 Ω·cm or more, and particularly preferably 450 Ω·cm or more. The upper limit of the electrical resistivity is not particularly limited, and may be, for example, 1000 Ω·cm.

The electrical resistivity is measured using a three-terminal electrode configuration provided with a guard electrode at an alternating voltage with a frequency of 120 Hz.

In the refractory, the residual volume expansion rate obtained as follows is preferably 10% or less, more preferably 8% or less, still more preferably 6% or less, and particularly preferably 4% or less.

A thermal cycle test is performed on the refractory in which a cycle of raising the temperature from 800°C to 1250°C at 450°C/h and lowering the temperature from 1250°C to 800°C at 450°C/h is repeated 40 times. In addition, heating from room temperature (about 25°C) to 800°C and cooling from 800°C to room temperature (about 25°C) are performed at about 160°C/h. The residual volume expansion rate is obtained by the following formula. 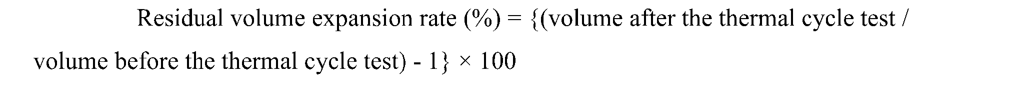 Residual volume expansion rate (%) = {(volume after the thermal cycle test / volume before the thermal cycle test) - 1} × 100

The bulk specific gravity of the refractory is preferably 4.7 g/cm³ or more, more preferably 4.8 g/cm³ or more, and still more preferably 4.9 g/cm³ or more, from the viewpoints of denseness and corrosion resistance against molten glass.

The bulk specific gravity is measured by the Archimedes method.

The porosity of the refractory is preferably 1.5% or less. When the porosity of the refractory is low, the corrosion resistance against molten glass improves. The porosity is more preferably from 0.1 to 1%. The porosity is measured by the Archimedes method.

The mass of the refractory is preferably 200 kg or more. It is preferable that the residual volume expansion rate of the refractory is suppressed and the generation of cracks is suppressed even when a large-sized refractory is produced. The mass of the refractory is more preferably from 400 to 1500 kg.

### [Applications of Refractory]

The refractory is suitably used, for example, as a material for a glass melting furnace. A glass melting furnace is used when manufacturing a glass product such as a glass sheet. In particular, the refractory is suitably used in portions of the glass melting furnace in contact with molten glass. Since the refractory according to the present disclosure has a high electrical resistivity, the refractory is particularly suitably used, for example, in an electrode installation site and the surrounding portion thereof of the glass melting furnace.

Therefore, in an embodiment according to the present disclosure, a glass melting furnace includes the refractory according to the present disclosure described above. In particular, a glass melting furnace using the refractory according to the present disclosure in a portion of the glass melting furnace in contact with molten glass, for example, an electrode installation site and the surrounding portion thereof, is preferable.

### Examples

Next, embodiments of the present disclosure will be specifically described with reference to Examples. However, embodiments of the present disclosure are not limited to these Examples. Examples 1 to 5, 10 to 12, and 15 are comparative examples, and Examples 6 to 9, 13, and 14 are working examples.

### <Production of Refractory>

As raw materials, desiliconized zirconia, alumina, zircon sand, silica, sodium carbonate, potassium carbonate, boron phosphate, and boron oxide were mixed to obtain a refractory raw material. The refractory raw material was melted by electrical heating using a so-called arc method in which graphite electrodes were lifted up from the surface of the molten material. The molten refractory raw material was poured into a graphite mold previously buried in Bayer alumina or silica sand, which is an annealing material, for casting, and left to cool until the temperature reached around room temperature (about 25°C). The mold was prepared to obtain a rectangular parallelepiped refractory of 130 mm × 160 mm × 300 mm in Examples 1 to 7 and 10 to 15, and 125 mm × 575 mm × 950 mm in Examples 8 and 9. After casting and cooling, an ingot and the graphite mold were taken out from the annealing material, and the graphite mold and the ingot were separated to obtain a refractory.

Tables 1 and 2 show component compositions of the refractories of Examples 1 to 15 obtained by adjusting the raw material compositions. The chemical composition is expressed by, in principle, quantitative analysis values determined by wavelength dispersive X-ray fluorescence spectrometry, quantitative analysis values determined by high-frequency inductively coupled plasma emission spectroscopy for B₂O₃, and quantitative values determined by atomic absorption spectrometry for Na₂O and K₂O. The content of ZrO₂ is determined by subtracting the mass of components other than ZrO₂ from the mass of the refractory.

### <Evaluation>

### [Residual Volume Expansion Rate]

A cylindrical sample having a diameter of 35 mm × 40 mm was cut out from the produced refractory. In an electric furnace, a thermal cycle test was performed on the refractory in which a cycle of raising the temperature from 800°C to 1250°C at 450°C/h and lowering the temperature from 1250°C to 800°C at 450°C/h was repeated 40 times. Here, heating from room temperature (about 25°C) to 800°C and cooling from 800°C to room temperature (about 25°C) were performed at about 160°C/h. The residual volume expansion rate was obtained by the following formula. 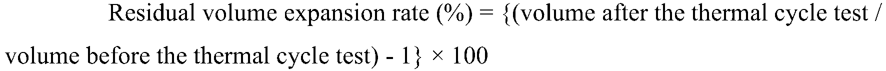 Residual volume expansion rate (%) = {(volume after the thermal cycle test / volume before the thermal cycle test) - 1} × 100

### [Glass Exudation]

A cylindrical sample having a diameter of 30 mm and a height of 30 mm was cut out using a diamond core drill, fired at 1500°C for 16 hours in an electric furnace, and then naturally cooled in the furnace. Presence or absence of glass exudation was visually observed in the sample before and after the firing.

### [Electrical Resistivity]

A disk-shaped sample having a diameter of 20 mm and a thickness of 3 mm was cut out from the refractory. Platinum paste was baked on one surface of the sample as a main electrode and a guard electrode, and on the remaining surface as a counter electrode only. After platinum electrodes for measuring the electrical resistivity of the sample were placed inside an electric furnace capable of raising the temperature up to a maximum temperature of 1650°C, the sample was placed in the electric furnace. While heating at 5°C/min, the volume resistance was continuously measured while applying an alternating voltage with a frequency of 120 Hz using an insulation resistance measuring device. The volume resistivity was calculated from the obtained volume resistance and was defined as the electrical resistivity (Ω·cm).

In Tables 1 and 2, the component composition represents proportions (% by mass) of respective components as a chemical composition on an oxide basis with respect to 100% by mass of the total of oxides. "-" in the component composition indicates that a corresponding component is not detected, and "-" in the evaluation indicates that a corresponding evaluation was not performed or could not be measured. "Na₂O+K₂O" represents the total proportion (% by mass) of Na₂O and K₂O, "Fe₂O₃+TiO₂" represents the total proportion (% by mass) of Fe₂O₃ and TiO₂, "(Na₂O+K₂O)/SiO₂" represents a value obtained by dividing the total mass of Na₂O and K₂O by the mass of SiO₂, and "(B₂O₃+P₂O₅)/Al₂O₃" represents a value obtained by dividing the total mass of B₂O₃ and P₂O₅ by the mass of Al₂O₃. The numbers in parentheses in the tables are values with one additional decimal place.

**[Table 1]**

| | | Example 1 | Example 2 | Example 3 | Example 4 | Example 5 | Example 6 | Example 7 | Example 8 | Example 9 |
|---|---|---|---|---|---|---|---|---|---|---|
| Composition | SiO₂ | 10.0 | 8.9 | 10.4 | 10.4 | 11.6 | 11.4 | 10.6 | 10.4 | 9.8 |
| | Al₂O₃ | 0.29 | 0.42 | 0.50 | 0.52 | 1.24 | 0.54 | 0.49 | 0.45 | 0.42 |
| | Fe₂O₃ | 0.05 | 0.04 | 0.04 | 0.04 | 0.05 | 0.04 | 0.04 | 0.04 | 0.04 |
| | TiO₂ | 0.15 | 0.13 | 0.11 | 0.12 | 0.16 | 0.12 | 0.12 | 0.13 | 0.14 |
| | ZrO₂ | 88.3 | 89.4 | 87.7 | 87.6 | 85.3 | 86.9 | 87.9 | 88.1 | 88.7 |
| | CaO | 0.10 | 0.05 | 0.05 | 0.05 | 0.08 | 0.05 | 0.05 | 0.05 | 0.04 |
| | P₂O₅ | 0.01 | 0.01 | 0.01 | 0.01 | 0.06 | 0.02 | 0.01 | 0.03 | 0.13 |
| | Na₂O | 0.01 | 0.02 | 0.02 | 0.02 | 0.02 | 0.02 | 0.02 | 0.05 | 0.05 |
| | K₂O | 0.07 | 0.03 | 0.02 | 0.00 | 0.09 | 0.14 | 0.09 | 0.06 | 0.07 |
| | B₂O₃ | 0.97 | 0.94 | 1.10 | 1.20 | 1.40 | 0.75 | 0.64 | 0.69 | 0.56 |
| | MgO | - | 0.02 | 0.05 | 0.06 | - | 0.05 | 0.05 | - | - |
| | Total | 100 | 100 | 100 | 100 | 100 | 100 | 100 | 100 | 100 |
| | Na₂O+K₂O | 0.08 | 0.05 | 0.04 | 0.02 | 0.11 | 0.16 | 0.11 | 0.11 | 0.12 |
| | Fe₂O₃+TiO₂ | 0.20 | 0.17 | 0.15 | 0.16 | 0.21 | 0.16 | 0.16 | 0.17 | 0.18 |
| | (Na₂O+K₂O)/SiO₂ | 0.01 (0.008) | 0.01 (0.006) | 0.00 (0.004) | 0.00 (0.002) | 0.01 (0.009) | 0.01 (0.014) | 0.01 (0.010) | 0.01 (0.011) | 0.01 (0.012) |
| | (B₂O₃+P₂O₅)/Al₂O₃ | 3.31 | 2.26 | 2.24 | 2.31 | 1.18 | 1.42 | 1.33 | 1.62 | 1.65 |
| Evaluation | Residual volume expansion Rate (%) | 14.1 | 10.5 | 5.8 | 6.7 | 8.7 | 5.2 | 3.5 | 3.2 | 2.1 |
| | Glass exudation | Not observed | Observed | Observed | Observed | Not observed | Not observed | Not observed | Not observed | Not observed |
| | Electrical resistivity (Ω·cm) | 490 | - | - | - | 256 | 462 | 460 | 482 | 692 |

**[Table 2]**

| | | Example 10 | Example 11 | Example 12 | Example 13 | Example 14 | Example 15 |
|---|---|---|---|---|---|---|---|
| Composition | SiO₂ | 9.3 | 12.0 | 10.4 | 11.6 | 11.5 | 4.6 |
| | Al₂O₃ | 0.19 | 0.61 | 0.42 | 0.55 | 0.52 | 0.56 |
| | Fe₂O₃ | 0.03 | 0.05 | 0.04 | 0.06 | 0.04 | 0.03 |
| | TiO₂ | 0.14 | 0.16 | 0.15 | 0.15 | 0.14 | 0.13 |
| | ZrO₂ | 89.7 | 84.9 | 88.3 | 86.1 | 86.9 | 93.7 |
| | CaO | 0.06 | 0.06 | 0.03 | 0.05 | 0.05 | 0.08 |
| | P₂O₅ | 0.00 | 0.02 | 0.02 | 0.02 | 0.04 | 0.01 |
| | Na₂O | 0.28 | 0.01 | 0.13 | 0.02 | 0.00 | 0.05 |
| | K₂O | 0.13 | 0.09 | 0.08 | 0.10 | 0.17 | 0.01 |
| | B₂O₃ | 0.17 | 2.09 | 0.37 | 1.30 | 0.57 | 0.75 |
| | MgO | 0.02 | 0.02 | 0.02 | 0.02 | - | 0.05 |
| | Total | 100 | 100 | 100 | 100 | 100 | 100 |
| | Na₂O+K₂O | 0.41 | 0.11 | 0.21 | 0.12 | 0.17 | 0.06 |
| | Fe₂O₃+TiO₂ | 0.18 | 0.21 | 0.18 | 0.21 | 0.18 | 0.16 |
| | (Na₂O+K₂O)/SiO₂ | 0.044 | 0.009 | 0.020 | 0.010 | 0.015 | 0.013 |
| | (B₂O₃+P₂O₅)/Al₂O₃ | 0.91 | 3.46 | 0.93 | 2.38 | 1.16 | 1.35 |
| Evaluation | Residual volume expansion Rate (%) | 11.1 | 14.5 | 5.2 | 5.3 | 3.1 | - |
| | Glass exudation | Not observed | Observed | Not observed | Not observed | Not observed | Observed |
| | Electrical resistivity (Ω · cm) | 171 | 316 | 203 | 332 | 561 | 149 |

In all of the Examples, the total mass of V₂O₅, CrO₃, Nb₂O₅, MoO₃, Ta₂O₅, WO₃, and SnO₂ on an oxide basis was less than 0.01% by mass with respect to 100% by mass of the total of oxides.

In the refractory of Example 1, in which the total proportion of Na₂O and K₂O was low, the residual volume expansion rate was high.

Similarly, in the refractory of Example 2, in which the total proportion of Na₂O and K₂O was low, the residual volume expansion rate was high, and glass exudation was observed after firing.

In the refractory of Example 3, in which the total proportion of Na₂O and K₂O was low, glass exudation was observed after firing.

In the refractory of Example 4, in which the total proportion of Na₂O and K₂O was low, glass exudation was observed after firing.

It is considered that one reason for this is that the proportion of alkali was low, and the denseness of the texture of the refractory was insufficient. In Examples 2 to 4, in which glass exudation was observed, the electrical resistivity was not evaluated since it would lead to equipment failure.

In the refractory of Example 5, in which the proportion of Al₂O₃ was high, the electrical resistivity was low.

In Example 10, the proportion of P₂O₅ was low, the total proportion of Na₂O and K₂O was high, and a high residual volume expansion rate and a low electrical resistivity were observed.

In Example 11, the proportion of B₂O₃ was high, the residual volume expansion rate was high, and glass exudation was observed.

In Example 12, the total proportion of Na₂O and K₂O was high, and the electrical resistivity was low.

In Example 15, the proportion of SiO₂ was low, the total proportion of Na₂O and K₂O was low, and the volume expansion was large, and therefore the residual volume expansion rate could not be measured. In addition, glass exudation was also observed. Furthermore, the electrical resistivity was also high.

In the refractories of Examples 6 to 9, 13, and 14, the electrical resistivity was high, the residual volume expansion rate was low, and glass exudation was not observed. Among them, the refractory of Example 9 having a high proportion of P₂O₅ showed a particularly high electrical resistivity.

From these results, it is understood that the refractory according to the present disclosure has a high electrical resistivity and a low residual volume expansion rate, and suppresses glass exudation.

### (Supplementary Notes)

The present disclosure includes the following aspects.
(1) An electrocast refractory, containing, as a chemical composition on an oxide basis, with respect to 100% by mass of a total of oxides:
   85.0% by mass or more of ZrO₂,
   from 8.0 to 12.0% by mass of SiO₂,
   from 0.10% by mass to less than 0.80% by mass of Al₂O₃,
   from 0.01 to 1.0% by mass of P₂O₅,
   from 0.10 to 1.0% by mass in total of Na₂O and/or K₂O, and
   from 0.05 to 3.0% by mass of B₂O₃,
   wherein a total amount of Fe₂O₃ and TiO₂ is less than 0.55% by mass.
(2) The electrocast refractory according to (1), containing, as a chemical composition on an oxide basis, with respect to 100% by mass of the total of oxides:
   from 0.10 to 0.70% by mass of Al₂O₃,
   from 0.01 to 0.5% by mass of P₂O₅,
   from 0.10 to 0.50% by mass in total of Na₂O and/or K₂O, and
   from 0.10% by mass to 2.0% by mass of B₂O₃.
(3) The electrocast refractory according to (1) or (2), containing, as a chemical composition on an oxide basis, with respect to 100% by mass of the total of oxides:
   from 0.10 to 0.60% by mass of Al₂O₃,
   from 0.01 to 0.3% by mass of P₂O₅,
   from 0.10 to 0.30% by mass in total of Na₂O and/or K₂O, and
   from 0.50% by mass to 1.0% by mass of B₂O₃.
(4) The electrocast refractory according to any one of (1) to (3), wherein a total amount of Fe₂O₃ and TiO₂ is 0.30% by mass or less as a chemical composition on an oxide basis, with respect to 100% by mass of the total of oxides.
(5) The electrocast refractory according to any one of (1) to (4), wherein a value obtained by dividing a total mass of Na₂O and K₂O by a mass of SiO₂ is 0.01 or more.
(6) The electrocast refractory according to any one of (1) to (5), wherein a value obtained by dividing a total mass of B₂O₃ and P₂O₅ by a mass of Al₂O₃ is 1.3 or more.
(7) The electrocast refractory according to any one of (1) to (6), wherein an electrical resistivity at 1600°C is 350 Ω·cm or more.
(8) The electrocast refractory according to any one of (1) to (7), wherein an electrical resistivity at 1600°C is 400 Ω·cm or more.
(9) The electrocast refractory according to any one of (1) to (8), wherein a residual volume expansion rate obtained by the following formula is 10% or less, after performing a thermal cycle test on the electrocast refractory, in which a cycle of raising a temperature from 800°C to 1250°C at 450°C/h and lowering a temperature from 1250°C to 800°C at 450°C/h is repeated 40 times: 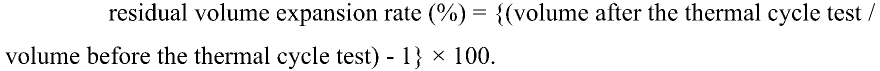 residual volume expansion rate (%) = {(volume after the thermal cycle test / volume before the thermal cycle test) - 1} × 100.
(10) A glass melting furnace, including the electrocast refractory according to any one of (1) to (9).
(11) A method of producing an electrocast refractory, the method including:
   heating and melting a refractory raw material; and
   cooling a molten material in a mold,
   wherein the refractory raw material contains, with respect to a total mass of oxides:
      85.0% by mass or more of ZrO₂,
      from 8.0 to 12.0% by mass of SiO₂,
      from 0.10% by mass to less than 0.80% by mass of Al₂O₃,
      from 0.01 to 1.0% by mass of P₂O₅,
      from 0.10 to 1.0% by mass in total of Na₂O and/or K₂O, and
      from 0.05 to 3.0% by mass of B₂O₃, and
      wherein a total amount of Fe₂O₃ and TiO₂ is less than 0.55% by mass.

The disclosure of Japanese Patent Application No. 2024-006270, filed on January 18, 2024, is incorporated herein by reference in its entirety. All documents, patent applications, and technical standards described in the present specification are incorporated herein by reference to the same extent as if each individual document, patent application, and technical standard was specifically and individually indicated to be incorporated by reference.

## Claims

1. An electrocast refractory, comprising, as a chemical composition on an oxide basis, with respect to 100% by mass of a total of oxides:
85.0% by mass or more of ZrO₂,
from 8.0 to 12.0% by mass of SiO₂,
from 0.10% by mass to less than 0.80% by mass of Al₂O₃,
from 0.01 to 1.0% by mass of P₂O₅,
from 0.10 to 0.20% by mass in total of Na₂O and/or K₂O, and
from 0.05 to 2.0% by mass of B₂O₃,
wherein a total amount of Fe₂O₃ and TiO₂ is less than 0.55% by mass.

2. The electrocast refractory according to claim 1, comprising, as a chemical composition on an oxide basis, with respect to 100% by mass of the total of oxides:
from 0.10 to 0.70% by mass of Al₂O₃,
from 0.01 to 0.5% by mass of P₂O₅, and
from 0.10% by mass to 1.5% by mass of B₂O₃.

3. The electrocast refractory according to claim 1, comprising, as a chemical composition on an oxide basis, with respect to 100% by mass of the total of oxides:
from 0.10 to 0.60% by mass of Al₂O₃,
from 0.01 to 0.3% by mass of P₂O₅, and
from 0.50% by mass to 1.3% by mass of B₂O₃.

4. The electrocast refractory according to claim 1, comprising from 0.11 to 0.20% by mass in total of Na₂O and/or K₂O.

5. The electrocast refractory according to claim 1, wherein a total amount of Fe₂O₃ and TiO₂ is 0.30% by mass or less as a chemical composition on an oxide basis, with respect to 100% by mass of the total of oxides.

6. The electrocast refractory according to claim 1, wherein a value obtained by dividing a total mass of Na₂O and K₂O by a mass of SiO₂ is 0.01 or more.

7. The electrocast refractory according to claim 1, wherein a value obtained by dividing a total mass of B₂O₃ and P₂O₅ by a mass of Al₂O₃ is 1.0 or more.

8. The electrocast refractory according to claim 1, wherein an electrical resistivity at 1600°C is 300 Ω·cm or more.

9. The electrocast refractory according to claim 1, wherein an electrical resistivity at 1600°C is 400 Ω·cm or more.

10. The electrocast refractory according to claim 1, wherein a residual volume expansion rate obtained by the following formula is 10% or less, after performing a thermal cycle test on the electrocast refractory, in which a cycle of raising a temperature from 800°C to 1250°C at 450°C/h and lowering a temperature from 1250°C to 800°C at 450°C/h is repeated 40 times: 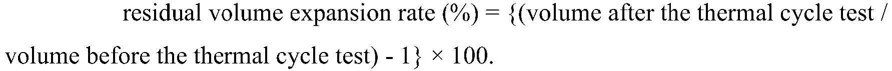 residual volume expansion rate (%) = {(volume after the thermal cycle test / volume before the thermal cycle test) - 1} × 100.

11. A glass melting furnace, comprising the electrocast refractory according to any one of claims 1 to 10.

12. A method of producing an electrocast refractory, the method comprising:
heating and melting a refractory raw material; and
cooling a molten material in a mold,
wherein the refractory raw material comprises, with respect to a total mass of oxides:
85.0% by mass or more of ZrO₂,
from 8.0 to 12.0% by mass of SiO₂,
from 0.10% by mass to less than 0.80% by mass of Al₂O₃,
from 0.01 to 1.0% by mass of P₂O₅,
from 0.10 to 0.20% by mass in total of Na₂O and/or K₂O, and
from 0.05 to 2.0% by mass of B₂O₃, and
wherein a total amount of Fe₂O₃ and TiO₂ is less than 0.55% by mass.
